(19) Europäisches Patentamt / European Patent Office / Office européen des brevets

(11) **EP 2 714 621 B1**

(12) **FASCICULE DE BREVET EUROPEEN**

(45) Date de publication et mention
de la délivrance du brevet:
**14.11.2018 Bulletin 2018/46**

(21) Numéro de dépôt: **12724644.5**

(22) Date de dépôt: **31.05.2012**

(51) Int Cl.:
*C04B 35/622* (2006.01)   *C04B 35/053* (2006.01)
*C04B 35/10* (2006.01)   *C04B 35/111* (2006.01)
*C04B 35/14* (2006.01)   *C04B 35/16* (2006.01)
*C04B 35/447* (2006.01)   *C04B 35/453* (2006.01)
*C04B 35/46* (2006.01)   *C04B 35/468* (2006.01)
*C04B 35/48* (2006.01)   *C04B 35/486* (2006.01)
*C04B 35/63* (2006.01)   *C04B 35/64* (2006.01)
*B28B 11/12* (2006.01)   *B28B 17/00* (2006.01)
*B23K 101/18* (2006.01)   *B23K 103/00* (2006.01)
*B23K 26/40* (2014.01)

(86) Numéro de dépôt international:
**PCT/EP2012/060261**

(87) Numéro de publication internationale:
**WO 2012/164025 (06.12.2012 Gazette 2012/49)**

(54) **PROCÉDÉ DE FABRICATION DE PIÈCES CÉRAMIQUES À PARTIR D'UN MÉLANGE CÉRAMIQUE DE PARTICULES**

VERFAHREN ZUR HERSTELLUNG KERAMISCHER TEILE AUS EINER KERAMISCHEN PARTIKELMISCHUNG

METHOD FOR MANUFACTURING CERAMIC PARTS FROM CERAMIC PARTICLE MIXTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **01.06.2011 EP 11168493**

(43) Date de publication de la demande:
**09.04.2014 Bulletin 2014/15**

(73) Titulaire: **Centre de Recherches de l'Industrie Belge de la Céramique ASBL**
**7000 Mons (BE)**

(72) Inventeurs:
• **PETIT, Fabrice**
  **F-59440 Avesnes-Sur-Helpe (FR)**
• **LARDOT, Véronique**
  **B-5081 St-Denis-Bovesse (BE)**
• **OTT, Cédric**
  **F-59199 Hergnies (FR)**
• **JUSTE, Enrique**
  **F-59300 Valenciennes (FR)**
• **CAMBIER, Francis**
  **B-7190 Ecaussines-d'Enghien (BE)**

(74) Mandataire: **Pronovem**
**Office Van Malderen**
**Avenue Josse Goffin 158**
**1082 Bruxelles (BE)**

(56) Documents cités:
JP-A- H07 106 192    JP-A- 2000 289 016
US-A- 4 650 619    US-A- 5 286 685
US-A1- 2007 006 561

• SLOCOMBE A ET AL: "The effect of pigment addition in diode laser ablation machining of ceramic/polymer composite material", APPLIED SURFACE SCIENCE, ELSEVIER, AMSTERDAM, NL, vol. 168, no. 1-4, 15 décembre 2000 (2000-12-15), pages 21-24, XP027317338, ISSN: 0169-4332 [extrait le 2000-12-15]
• KAMRAN IMEN ET AL: "Pulse CO2 Laser Drilling of Green Alumina Ceramic", IEEE TRANSACTIONS ON ADVANCED PACKAGING, IEEE SERVICE CENTER, PISCATAWAY, NJ, USA, vol. 22, no. 4, 1 November 1999 (1999-11-01), XP011002196, ISSN: 1521-3323

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **YAMAMOTO G ET AL: "A novel structure for carbon nanotube reinforced alumina composites with improved mechanical properties", NANOTECHNOLOGY, IOP, BRISTOL, GB, vol. 19, no. 31, 6 August 2008 (2008-08-06), page 315708, XP020144430, ISSN: 0957-4484, DOI: 10.1088/0957-4484/19/31/315708**

**Description**

La présente invention concerne un procédé de fabrication de pièces céramiques à partir d'un mélange céramique.

Le procédé d'usinage laser par érosion est décrit par Pham D.T. et coll. dans Laser milling, Proc Instn Mech Engrs, Vol.216 Part B : J. Engineering Manufacture, p.657-667 (2002). Pour l'usinage, l'irradiation laser est typiquement délivrée en des temps très brefs sur des surfaces de dimensions réduites. Il en résulte des densités de puissance en crête extrêmement élevées ($10^{12}$ W/m$^2$) qui engendrent une série de transformations dans la matière irradiée.

La fusion et la vaporisation de la matière peuvent ainsi être obtenues ce qui crée localement une microcavité d'usinage. La création de proche en proche d'une série de telles cavités (grâce notamment à un déflecteur galvanométrique ou au déplacement d'axes motorisés) permet de structurer la topographie de la surface et de reproduire progressivement une forme complexe. Ce procédé, bien connu sous la dénomination de fraisage au laser ou « laser milling » souffre toutefois d'une série de handicaps :

- Pour que le processus soit efficace, le matériau doit être absorbant à la longueur d'onde du faisceau laser ce qui requiert d'adapter la source laser au matériau à usiner.
- Les temps d'usinage peuvent être très longs (plusieurs dizaines d'heures) et ce même pour des volumes de matière éliminée faibles ou limités (quelques dizaines de mm$^3$ par exemple).
- L'échauffement produit par le faisceau dans la pièce génère une «zone affectée thermiquement» où les propriétés du matériau sont localement dégradées (formation d'une phase vitreuse, fissuration, création de phases nouvelles indésirables,...). Cet aspect est particulièrement critique pour les matériaux céramiques, réputés très fragiles, et pour lesquels la génération de fissures par exemple est particulièrement délétère du point de vue de leur tenue mécanique.

En raison de ces limitations, ce procédé est souvent réservé à la fabrication de pièces uniques et en très petites quantités (matrices d'emboutissage, structuration de moules...).

Dans la demande de brevet WO 2006/079459 on décrit un procédé d'usinage à cru au départ d'un flux de matière ou d'énergie tel qu'un laser. L'usinage proposé est réalisé sur une pièce céramique ou métallique crue constituée d'un assemblage de grains maintenus entre eux par un liant organique. La mise en forme de la pièce crue est obtenue par un procédé classique de métallurgie des poudres également utilisé par les céramistes et largement documenté dans la littérature (pressage, extrusion, etc...). L'incorporation d'un liant est également connue de l'état de l'art pour permettre d'améliorer la cohésion de l'assemblage granulaire. L'usinage décrit dans ce document antérieur s'obtient par découpes ou « tranchages » successifs de l'objet cru par le flux d'énergie ou de matière.

La demande de brevet DE 19501279 révèle l'utilisation d'un laser pulsé UV pour obtenir une élimination de matière sélective. Toutefois, ce document souligne que seuls de faibles enlèvements de matière sont possibles par cette technique en raison de la formation rapide d'une couche de matière fondue qui se redépose en surface. A cet inconvénient le document apporte la solution d'un usinage de surface en présence d'un fluide pour éviter cette redéposition de la matière d'ablation.

Dans A. Kruusing, Underwater and water-assisted laser processing : Part 1-general features, steam cleaning and schock processing Optics and Lasers in Engineering 41 (2004), p.307-327, on décrit également l'utilisation d'un usinage laser de surface en présence d'un film liquide (souvent de l'eau). Lors de l'irradiation laser, le film liquide est localement échauffé brutalement et s'évapore de manière explosive en éjectant les scories et les particules fondues de la surface du matériau.

Dans la demande de brevet internationale WO 2010/055277 on étend le principe de l'usinage en milieu liquide au cas de pièces crues céramiques ou métalliques. L'usinage est réalisé sur des assemblages granulaires de métal ou de céramique (maintenus entre eux par un liant organique) qui sont immergés dans un fluide (eau ou alcool) et/ou dont la surface est pulvérisée par un tel fluide. Des durées d'immersion variables (de ½ heure à 24 heures) sont requises pour permettre l'intrusion du liquide au coeur de la pièce crue via sa porosité ouverte.

Lors de l'irradiation laser, un échauffement très rapide du liquide contenu dans le matériau cru se produit en surface de celui-ci. La vaporisation extrêmement rapide dudit liquide (« vaporisation explosive ») conduit à l'éclatement local de la structure de la pièce crue. Le procédé a été mis en oeuvre avec succès sur certains matériaux céramiques (alumine et stéatite) mais il s'avère incapable d'usiner la cordiérite par exemple. Les auteurs soulignent que toutes les céramiques ne sont pas adaptées à ce type d'usinage. En outre, les profondeurs usinées demeurent faibles (moins de 1 mm typiquement) car l'échauffement diffus de la pièce engendre rapidement une évaporation non désirée du liquide. Poursuivre l'usinage requiert une immersion renouvelée de la pièce ou une pulvérisation continue du liquide sur la surface à usiner. Le procédé se révèle particulièrement lourd à mettre en oeuvre pour au moins trois raisons : L'évaporation rapide du solvant limite les profondeurs d'usinage à une fraction de mm. Le procédé est inapplicable à certains matériaux céramiques. Il est nécessaire d'usiner les pièces immédiatement après leur émersion, un stockage intercalaire étant à exclure étant donné l'évaporation naturelle du liquide mis en oeuvre.

La demande de brevet US 2010/0032417 mentionne l'usinage à cru par laser UV (longueur d'onde inférieure à 400 nm) pour le décapage/nettoyage de « solder pad » ou le perçage de trous dans des dispositifs destinés à la micro-électronique. Un mode de réalisation prévoit un procédé d'usinage par vaporisation explosive du liant organique présent dans la masse crue. Les vapeurs organiques à haute température se détendent à grande vitesse et désintègrent localement le matériau cru en éjectant la matière. Dans ce document, la phase organique qui permet l'usinage à cru est le liant bien connu des céramistes qui permet d'assurer la cohésion des grains entre eux et accroît la résistance mécanique de la pièce.

Dans J. Gurauskis et coll., Laser drilling of Ni-YSZ Cements, Journal of the European Ceramic Society 28(2008), p. 2673-2680, les auteurs décrivent en détail le processus de perforation par laser d'une pièce céramique crue. Les particules de matière céramique absorbent le rayonnement laser ce qui provoque leur montée rapide en température. Il se produit alors un transfert de chaleur au liant organique qui pyrolise en produisant un jet de gaz. L'explosion gazeuse entraîne avec elle la matière qui entoure le site de traitement.

Un processus comparable est décrit dans Kamran Imen et al., Pulse CO2 Laser Drilling of Green Alumina Ceramic, IEEE Transactions on Advanced Packaging, Vol. 22, n° 4, November 1999. L'exposition au rayonnement laser s'effectue ici sous pression.

Il résulte de cet examen de l'art antérieur que, dans le cas des procédés d'usinage par érosion sous l'effet d'un rayonnement laser d'une pièce céramique crue mise en forme à partir d'un mélange céramique de particules, il y a toujours un échauffement rapide des particules en matière céramique. Cet échauffement est mis à profit pour vaporiser une phase liquide qui, simultanément, est destinée à protéger la matière céramique d'un échauffement excessif, ou pour pyroliser sous la forme d'un jet gazeux le liant organique qui maintient les particules céramiques ensemble.

Or, il se fait que les matières céramiques ne sont pas particulièrement adaptées à absorber un rayonnement laser dans les longueurs d'ondes comprises entre 200 nm et 3 $\mu$m. L'absorptivité des matières céramiques, en particulier de type oxyde, est souvent médiocre dans cette gamme de longueurs d'ondes. Tout rayonnement laser émettant dans cette gamme doit donc être suffisamment puissant et prolongé pour que le transfert de chaleur de i'énergie absorbée par la matière céramique à la phase liquide ou au liant ait pour effet une vaporisation explosive de ces phases accompagnée d'un arrachement de matière. Il en résulte le danger qu'une fusion partielle des particules céramiques se produise pendant un processus mal contrôlé, ce qui est à éviter, et une certaine lenteur dans le processus d'usinage. De plus, en cas d'utilisation de polymère liant organique, celui-ci présente l'inconvénient d'un fluage et d'une fusion non contrôlés dans la zone thermiquement affectée. Par ailleurs, dans une gamme de longueurs d'ondes s'étendant au-delà de 3 $\mu$m (Infra Rouge lointain) les absorptivités de la matière céramique ainsi que celle du liant ou de la phase liquide sont considérablement plus élevées ce qui conduit à un échauffement conjoint des deux matières et aux inconvénients susmentionnés.

On connaît par ailleurs des mélanges céramiques contenant en grande quantité des combinaisons d'agents porogènes, dont l'un peut être formé de carbone. Ces mélanges sont mis en forme et cuits, notamment pour la réalisation de systèmes poreux de traitement des gaz d'échappement des voitures (v. US 2007/0006561) et ils ne subissent aucun usinage à cru par traitement laser.

Les brevet JPH 07106192 et JPH 2000289016 décrivent un procédé pour forer un trou débouchant dans une couche isolante dans une structure semiconductrice. Aucun de ces document ne propose l'utilisation d'impulsion laser de durée courte.

La présente invention a pour but de mettre au point un procédé de fabrication de pièces céramiques selon les revendications annexées. Dans tous les cas, la portée de la présente invention est décrite dans les revendications annexées. En cas de contradiction entre l'objet de la présente description et l'objet des revendications, il doit être compris que l'objet de l'invention est décrit dans les revendications. Un passage de la description en contradiction avec l'objet des revendications, doit être considéré comme hors du cadre de l'invention. Pour atteindre ce but un mélange céramique de particules est préparé, qui permette un usinage à cru de pièces céramiques présentant des formes complexes au départ de formes simples. Cet usinage doit être d'une grande souplesse et d'une très grande rapidité d'exécution, sans présenter les inconvénients des traitements selon la technique antérieure.

On résout ces problèmes suivant l'invention par l'utilisation d'un mélange céramique de particules tel qu'indiqué au début. Dans ce mélange, ladite matière solide inorganique est absorbante pour un rayonnement laser émettant un flux d'énergie prédéterminé à une longueur d'ondes prédéterminée, et présente, à cette longueur d'ondes prédéterminée, une absorptivité spécifique supérieure à celle des autres composants du mélange céramique, et ledit mélange céramique contient les particules de matière solide inorganique absorbante à l'état dispersé, en des proportions inférieures à 5% et supérieures à 1% en poids du mélange sec, les particules de matière solide inorganique absorbante étant dégradables brutalement avec émission gazeuse, en présence dudit rayonnement laser.

En cas d'exposition de ce mélange céramique de particules au rayonnement laser susdit, ce ne sont donc pas les particules frittables en matière céramique qui vont directement et préférentiellement absorber le flux d'énergie, mais des particules d'un additif minéral sélectionné dans ce but que l'on appellera dans la suite matière solide dispersée absorbante MSDA. Celles-ci, touchées par le rayonnement laser, peuvent se dégrader sous forme gazeuse en des espaces de temps

extrêmement courts, en particulier inférieurs à la microseconde. Notamment, des lasers pulsés de type nanoseconde (durées de pulsations inférieures à 150 ns) émettant au voisinage de 1 μm et de puissance moyenne (typiquement de 5 à 100 W de puissance moyenne) sont bien appropriés dans ce but. Tout risque d'échauffement intempestif, même local, de la matière céramique environnante est ainsi évité et les temps d'usinage peuvent être très courts.

Le coefficient d'absorption A ou absorptivité est une propriété fondamentale régissant l'interaction entre un rayonnement électromagnétique et une surface impactée par celui-ci. Il est donné par :

$$A = 1-R$$

où R est la réflectivité de la surface du matériau irradié.

Cette quantité sans unité est fonction de la longueur d'onde du rayonnement incident. Elle est comprise entre 0 (aucune absorption) et 1 (absorption complète). (voir : Ready J.F. (éd.), LIA handbook of laser materials processing, Laser Institute of America, Magnolia Publishing Inc., 2001, ainsi que Oliveira C. et al., Etude de l'absorption du rayonnement IR en vue du traitement laser d'alliages ferreux, J. Phys. III France, 2 (1992), 2203-2223).

Par l'incorporation d'une fraction massique de MSDA inférieure à 5 % en poids du mélange sec, on assure deux objectifs, un usinage efficace comme indiqué ci-dessus, mais aussi une densification de la pièce à usiner la plus complète possible, avantageusement 100 % de la densité théorique.

De préférence, dans le mélange céramique de particules suivant l'invention, la matière solide inorganique dispersée absorbante présente, par rapport aux autres composants, un différentiel d'absorptivité du rayonnement laser supérieur à 0,2, avantageusement égal ou supérieur à 0,4, de préférence égal ou supérieur à 0,5. Avantageusement, la matière solide dispersée absorbante est une matière non liante. Il faut noter que le mélange céramique de particules suivant l'invention peut contenir, comme autre additif, au moins un liant pour les particules en matière céramique. On peut envisager tout type de liant connu dans la technique, notamment un liant organique que ce soit sous forme de particules collantes en soi distribuées entre les particules frittables en matière céramique ou de revêtement de celles-ci. La teneur en liant organique incorporée dans le mélange suivant l'invention est de préférence inférieure à 5 % en poids du mélange sec, en particulier inférieure à 3 % en poids.

Suivant une forme de réalisation de l'invention, la matière solide dispersée absorbante est stable en l'absence de sollicitations thermiques et/ou optiques. Le mélange céramique de particules peut donc être stocké sans problème en condition normale, en particulier à la température ambiante et en l'absence d'une exposition à un rayonnement laser II peut se présenter sous la forme d'une poudre, de préférence totalement sèche, ou d'une suspension des particules dans un milieu liquide de suspension, par exemple un milieu aqueux, comme de l'eau. Avantageusement, la MSDA est totalement dégradable dans des conditions thermiques contrôlées, supérieures à 400°C. Ainsi, après usinage à cru de la pièce céramique mise en forme à partir du mélange céramique de particules, il est possible de faire complètement disparaître toute trace de la matière solide inorganique dispersée absorbante avant l'étape de frittage de la pièce.

Suivant l'invention, la matière solide inorganique dispersée absorbante est totalement ou au moins partiellement du carbone. On doit choisir le carbone parmi le groupe constitué du graphite, de l'anthracite, du noir de carbone, du charbon actif, des nanotubes de carbone, des feuillets de graphène et leurs mélanges. On peut aussi envisager une phase organique chargée d'une dispersion de carbone, par exemple de graphite ou de noir de carbone.

Une MSDA de choix pour l'usinage de pièces crues céramiques est le carbone et ses dérivés. Le carbone présente un coefficient d'absorption ou absorptivité élevé dans une large gamme de fréquences accessibles aux sources lasers modernes, notamment entre 200 nm et 3 μm. Irradié en mode pulsé, le carbone se dégrade violemment avec émission gazeuse ce qui éclate la structure du matériau cru environnant provoquant l'éjection des particules en matière céramique. Une dispersion de carbone de dimension micrométrique ou submicronique (d90 < 5 μm, de préférence < 1 μm) est avantageuse car elle permet une excellente homogénéité du matériau cru. De manière générale, quelle que soit la nature de la MSDA dispersée, plus la taille de ses particules sera petite et meilleure pourra être l'homogénéité du matériau cru. La quantité de carbone requise pour une bonne efficacité de l'usinage à cru sera également moindre avec une dispersion de plus petite granulométrie.

Le carbone présente l'intérêt d'une excellente absorption d'énergie laser dans une gamme étendue de longueurs d'ondes (de l'UV jusqu'à l'IR lointain) et il est donc compatible avec un usinage par laser pulsé de type nanoseconde, par exemple excimère, Nd:YAG, $Nd:YVO_4$, laser fibré ou autre. Dans la gamme de longueurs d'ondes comprise entre 200 nm et 3 μm, le coefficient d'absorption du carbone dépasse la valeur de 0,7.

De préférence, les particules frittables en matière céramique sont totalement ou au moins partiellement en matière céramique de type oxyde. On peut citer en particulier, comme matière céramique, l'alumine, la zircone, la silice, la magnésie, l'oxyde de zinc, l'oxyde de titane, des oxydes mixtes tels que PZT, le titanate de baryum, les silicates, l'hydroxyapatite, le phosphate tricalcique et leurs mélanges.

Les particules frittables de matière céramique peuvent présenter avantageusement une granulométrie micronique ou submicronique.

La fraction massique de MSDA incorporée dans le mélange céramique de particules suivant l'invention peut être avantageusement comprise entre 1 % et 3 % en poids du mélange sec.

La présente invention est aussi relative à des ébauches céramiques et à des pièces céramiques usinées, à l'état cru, qui sont à base d'un mélange céramique de particules suivant l'invention. Elle concerne également les pièces céramiques frittées obtenues après frittage des pièces céramiques usinées, à l'état cru, conformes à l'invention. L'invention concerne un procédé de fabrication de pièces céramiques à l'état cru, à partir d'un mélange céramique de particules comme décrit ci-dessus.

Comme pièces céramiques usinées suivant l'invention, on peut envisager notamment des composants destinés à l'électronique, l'électromécanique, au biomédical (prothèses dentaires, substituts osseux, etc.), à la fabrication de filières d'extrusion, à la bijouterie, à la mécanique de précision, à la filtration, aux supports de catalyse et autres.

Suivant l'invention, ce procédé comprend une mise en oeuvre d'un mélange céramique de particules suivant l'invention, contenant, comme composants, une partie majoritaire en poids de particules frittables en matière céramique et des particules d'au moins un additif, au moins un desdits au moins un additif étant une matière solide inorganique.

Dans le procédé suivant l'invention, ladite matière solide inorganique est absorbante pour un rayonnement laser émettant un flux d'énergie prédéterminé à une longueur d'ondes prédéterminée, et présente, à cette longueur d'ondes, une absorptivité spécifique supérieure à celle des autres composants du mélange céramique, ledit mélange céramique contenant les particules de matière solide inorganique absorbante, comme décrit ci-dessus, à l'état dispersé, en des proportions inférieures à 5% en poids et supérieures à 1 % en poids du mélange sec. Le procédé suivant l'invention comprend en outre

- une mise en forme à cru de ce mélange céramique avec obtention d'une ébauche céramique crue, sèche,
- un usinage à cru de l'ébauche céramique crue, par enlèvement de matière céramique, par son exposition audit rayonnement laser pulsé émettant un flux d'énergie prédéterminé à ladite longueur d'ondes prédéterminée, et
- pendant ladite exposition à ce rayonnement laser, une absorption sélective directe de l'énergie de rayonnement laser par les particules de matière solide inorganique dispersée absorbante qui se dégradent brutalement, avec émission gazeuse, dislocation locale de matière céramique de l'ébauche céramique crue, éjection de cette matière céramique disloquée et obtention d'une pièce céramique usinée, à l'état cru.

Pour la réalisation du mélange céramique de particules, les composants de celui-ci, et donc nécessairement les particules de la ou des matières céramiques et de la matière solide inorganique dispersée absorbante, peuvent être mélangés par voie sèche, ce qui donne une poudre sèche. On peut aussi les mélanger par voie liquide en mettant les composants en suspension. Dans ce cas on peut prévoir de sécher le mélange en suspension de manière connue, par exemple dans une étuve, un four, par lyophilisation ou atomisation, avant la mise en forme, afin également d'obtenir une poudre sèche pour la mise en forme.

Avantageusement la mise en forme à cru est réalisée par des techniques connues de l'homme de métier, par exemple par extrusion, coulage ou pressage. En cas d'extrusion ou de coulage, on met en oeuvre le mélange céramique sous forme de pâte ou de suspension et , dans ce cas, l'étape de séchage indiquée ci-dessus est alors effectuée après la mise en forme. Dans tous les cas on obtient une ébauche céramique crue, sèche, qui est destinée à l'usinage.

Après mise en forme de cette ébauche céramique crue, sèche, la masse crue peut être facilement usinée par laser. Le rayonnement laser est pulsé et peut provenir d'une source laser appropriée quelconque, émettant dans l'UV, l'IR ou le visible. Le rayonnement laser présente une longueur d'ondes de 200 nm à 3 $\mu$m, notamment de 900 nm à 1100 nm. Il est nécessaire de prévoir des durées d'impulsion inférieures à 150 ns. Lorsque l'usinage a lieu en présence d'une atmosphère oxydante, la matière solide dispersée absorbante exposée au rayonnement laser peut être oxydée sous forme d'un gaz. De manière particulièrement avantageuse, l'usinage a lieu à la pression ambiante, sous air.

Le procédé peut comprendre en outre, après usinage à cru, un frittage des particules de matière céramique de la pièce céramique usinée crue. La température de frittage va dépendre de la nature des particules de matière céramique.

On peut avantageusement prévoir, avant le frittage, une élimination de la matière solide inorganique dispersée absorbante hors de la pièce céramique usinée crue par sollicitation thermique de celle-ci à une température de dégradation de cette matière. Dans ce cas, la pièce céramique frittée est totalement dépourvue de MSDA, comme les pièces céramiques frittées selon l'état antérieur de la technique, mais sans présenter les défauts de celles-ci, tels que microfissures, dépôts de matière vitreuse, etc..

L'invention va à présent être décrite de manière plus détaillée à l'aide d'exemples non limitatifs.

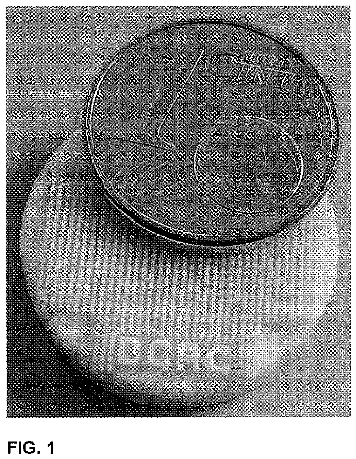

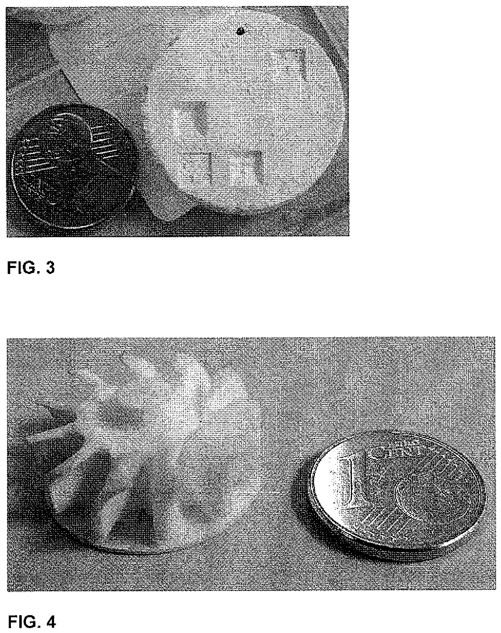

Les figures annexées 2 et 5 illustrent des pièces usinées suivant l'invention avant frittage, les figures 1, 4 et 6 des pièces usinées suivant l'invention après frittage et la figure 3 une pièce usinée à cru sans MSDA.

## Exemple 1

### Usinage à cru par laser Nd:YVO$_4$ d'une alumine fine

Une quantité déterminée d'alumine (P172SB de Pechiney) est pesée (100 g) et mise en suspension à pH naturel dans de l'eau déminéralisée (100 g). 1% massique de polyéthylène glycol PEG est ajouté à la suspension (soit 1 g) pour servir de liant organique. 23,5 g d'une suspension aqueuse d'un graphite colloïdal (Aquadag 18% - Acheson Industries Ltd) sont ajoutés à la suspension de particules d'alumine, l'ensemble est mélangé pendant 30 minutes puis séché soit par lyophilisation soit à l'évaporateur rotatif. On obtient ainsi un mélange sec contenant 4,2 % en poids de graphite par rapport au poids total du mélange. Les particules de graphite présentent une granulométrie de d90 < 5 μm et les particules d'alumine de d50 = 0,4 μm.

La poudre mixte ainsi obtenue est mise en forme par pressage uniaxial (40 MPa appliqués sur des pastilles de diamètre de 25 mm), suivi d'une post-compaction isostatique (170 MPa pendant 2 min).

Les ébauches crues obtenues en forme de pastilles sont ensuite, à la pression ambiante, usinées par laser au départ d'une station de marquage commerciale Trumark station (Trumpf) équipée d'un laser à solide Nd:YVO$_4$ de 20 W de puissance nominale doté d'un Q-Switch, permettant de travailler en mode pulsé, d'une table motorisée XY et d'une tête galvanométrique autorisant le balayage du faisceau sur la surface à usiner. L'optique de focale de 163 mm autorise l'obtention d'un spot de 45 μm. Les paramètres optimaux de lasage obtenus sur base d'une étude paramétrique sont 40%-80% de puissance nominale, une fréquence de travail de 40-80 kHz, une vitesse de balayage de 100-6000 mm/s, un intervalle entre pulsations de 1 à 5 μs et des durées d'impulsions comprises entre 8 et 17 ns. L'usinage est réalisé au départ d'un fichier CAO au format .dxf par exemple.

Le laser émet un rayonnement présentant une longueur d'ondes de 1,06 μm. A cette longueur d'ondes l'alumine présente une absorptivité d'environ 0,1 tandis que celle du carbone s'élève à environ 0,9.

Les résultats obtenus, illustrés sur la figure 1 après frittage, révèlent la possibilité d'usiner des grilles finement perforées (diamètre de trou de 100 μm espacés de 60 μm) sur des profondeurs de l'ordre de 1 mm ainsi que des usinages très profonds sur des profondeurs dépassant facilement 5 mm. La seule limite identifiée à la profondeur d'usinage est donnée par le rapport d'aspect largeur de trou/profondeur qui est voisin de 1/10 pour l'optique de focalisation utilisée. Les taux d'enlèvement de matière enregistrés sont de l'ordre de 10-100 mm$^3$ par min.

Les pièces crues usinées sont ensuite traitées thermiquement sous air en deux étapes : la première étape vise à éliminer totalement le carbone résiduel dans la pièce, la seconde étape vise à fritter l'alumine. Un cycle de traitement thermique incluant un palier de 1 heure à 600 °C (vitesse de montée de 5°C/min) suivie d'un palier à 1550°C pendant 1 heure (vitesse de montée de 5°C/min) et enfin d'une descente jusqu'à la température ambiante (à 5°C/min) permet d'obtenir une pièce parfaitement dense, exempte de défaut apparent (pores ou fissures). Les surfaces usinées observées en microscopie électronique à balayage n'ont fait apparaître aucune fissure, aucune porosité, ni couche de matière fondue redéposée.

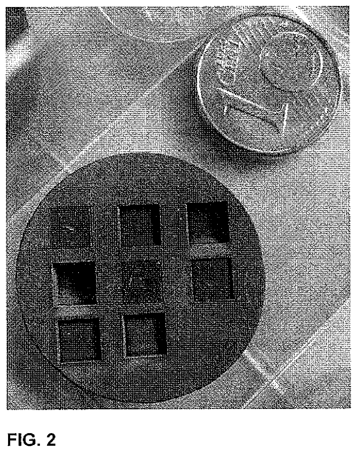

Avec cette alumine, des essais comparatifs analogues ont été réalisés sur des ébauches crues avec et sans MSDA. Une ébauche crue usinée suivant l'invention est illustrée sur la figure 2. Elle présente des bords de cavité nets et des fonds de cavité parfaitement propres. La couleur grisâtre de l'ébauche est due à la présence de graphite comme MSDA. Après frittage et dégradation du graphite la pièce aura une couleur identique à celle obtenue sur l'ébauche de la figure 1. Les ébauches crues sans MSDA ont révélé la possibilité de réaliser un usinage à cru (voir figure 3). Toutefois, des puissances de crête supérieures à celles prévues pour l'usinage à cru avec MSDA sont alors requises (typiquement >60-80% de la puissance nominale). Par ailleurs, les taux d'enlèvement de matière sont très inférieurs à ceux obtenus en présence de MSDA (diminués d'un facteur 3 au minimum). De même, les profondeurs usinables sont également fortement réduites et ne peuvent pas dépasser 2 mm : les grains d'alumine se mettent rapidement à fritter, voire à fondre, sous l'effet de l'énergie apportée par le faisceau ce qui stoppe le processus d'usinage à cru. L'usinage à cru en l'absence de MSDA s'explique par la vaporisation superficielle des grains d'alumine dans la zone irradiée par le faisceau qui engendre des contraintes faisant exploser localement la structure.

## Exemple 2

### Usinage à cru par laser Nd:YVO$_4$ d'une zircone fine

A la différence de l'alumine P172 mise en oeuvre dans l'exemple précédent, des essais d'usinage à cru sur des pastilles pressées de zircone (Tosoh Y-TZP) ont révélé l'impossibilité d'usiner sans MSDA.

Usinage de la zircone par incorporation de MSDA de type graphite.

La recette ayant permis l'usinage à cru est calquée sur celle de l'alumine: 100 g de zircone (d50 = 200 nm) sont dispersés dans 100 g d'eau déminéralisée dans laquelle 1g de PEG 2000 a été préalablement dissous. 14 g d'Aquadag (d90 < 5 μm) sont ensuite ajoutés à la suspension puis l'ensemble est homogénéisé pendant 30 min en présence de média de broyage. La suspension est ensuite séchée par lyophilisation ou par évaporateur rotatif ce qui donne 2,4 % en poids de carbone par rapport au mélange sec. La poudre obtenue est pressée sous forme de pastilles de 25 mm de diamètre sous une pression uniaxiale de 40 MPa puis les pastilles sont post-compactées isostatiquement à 175 MPa.

Les pastilles crues obtenues sont ensuite usinées par laser au départ de la même station de marquage que dans l'exemple précédent. Les paramètres optimaux de lasage obtenus sur base d'une étude paramétrique sont similaires à ceux obtenus pour l'alumine, soit 40%-80% de puissance nominale, une fréquence de travail de 40-80 kHz, une vitesse de balayage de 100-6000 mm/s, un intervalle entre pulsations de 1 à 5 $\mu$s et des durées d'impulsions comprises entre 8 et 17 ns. L'usinage est réalisé au départ d'un fichier CAO au format .dxf par exemple.

A la longueur d'ondes de 1,06 $\mu$m du rayonnement laser, la zircone présente une absorptivité de 0,2 alors que celle du graphite est de l'ordre de 0,9.

De nouveau, des taux d'enlèvement de matière très importants ont pu être enregistrés (> 50 mm$^3$ / min) sur des profondeurs de plusieurs mm.

Dans ce cas également, aucune limite apparente de profondeur autre que le rapport d'aspect des zones usinées n'a été noté. Différents motifs d'usinage ont été réalisés impliquant la création de détails fins et/ou grossiers. La précision d'usinage s'est avérée de l'ordre de la taille du faisceau laser à la focale.

Après élimination du carbone résiduel sous air et frittage naturel des pièces usinées, aucun défaut apparent n'a été constaté.

Les surfaces usinées observées en microscopie électronique à balayage n'ont fait apparaître aucune fissure, aucune porosité ni couche de matière fondue redéposée.

Certaines pastilles non traitées ont été stockées à l'air pendant plusieurs jours, puis usinées. Le même comportement à l'usinage a été noté que sur les pastilles d'origine, preuve de l'absence de vieillissement des pastilles. Pour des durées de stockage longues des pièces pressées on pourra par contre placer lesdites pièces dans une enceinte hermétique en présence de dessicant pour éviter leur humidification par l'air ambiant.

### Exemple 3

**Usinage à cru par laser 3D d'une alumine fine**

Une poudre mixte d'alumine fine P172SB de Pechiney a été préparée contenant 10% volumique (soit environ 4 % en poids) de carbone (Aquadag) selon le protocole illustré dans l'Exemple 1. Des pastilles de diamètre de 25 mm ont été pressées par pressage uniaxial à une charge de 40 MPa. Ces pastilles ont ensuite été traitées par laser Nd:YAG pulsé de type nanoseconde doté d'une tête galvanométrique et de 5 axes motorisés (3 axes cartésiens et 2 axes rotatifs). Un plan CAO de micro-turbine radial a été édité et l'objet a été reproduit par micro-usinage en utilisant les paramètres détaillés à l'Exemple 1. Chacune des aubes de la turbine a été réalisée l'une après l'autre par rotation successive de la pastille. Dans cet exemple, le temps d'usinage de la micro-turbine est de l'ordre de 20 min. L'élimination du graphite et le frittage de l'objet ont été réalisés selon le protocole de l'Exemple 1.

Le résultat obtenu est présenté à la figure 4 qui illustre la micro-turbine usinée après élimination de la MSDA et frittage. L'objet obtenu est exempt de défaut apparent (fissure, porosité...) et la pièce après frittage est totalement dense.

### Exemple 4

**Usinage laser 3D en cru de zircone**

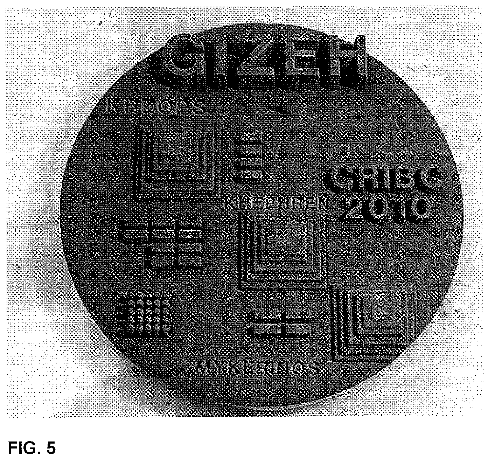

Des pastilles pressées obtenues au départ du protocole de l'Exemple 2 ont été usinées couche par couche, chaque couche correspondant à un plan d'usinage spécifique. L'usinage des pyramides présentées à la figure 5 requiert 20 min. Le sommet de l'obélisque en dessous des lettres Z et E a une section de l'ordre de 50 $\mu$m, à peine supérieure à la taille du faisceau à la focale.

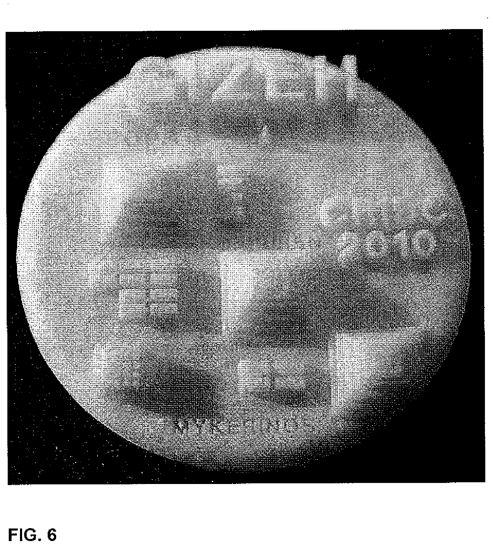

La figure 6 représente une pastille usinée après élimination de la MSDA et frittage. Comme on peut le voir, après frittage, aucune distorsion géométrique de la pièce n'est notée. Les pyramides usinées ainsi que l'obélisque sont intactes et exemptes de défaut apparent.

Il doit être entendu que la présente invention n'est en aucune façon limitée aux formes de réalisation décrites ci-dessus et que bien des modifications peuvent y être apportées dans le cadre des revendications annexées.

### Revendications

1. Procédé de fabrication de pièces céramiques comprenant:

   - une mise en oeuvre d'un mélange céramique de particules comportant, comme composants, une partie majoritaire en poids de particules frittables en matière céramique et des particules d'au moins un additif, au moins un desdits au moins un additif étant une matière solide inorganique,

   **caractérisé en ce que** ladite matière solide inorganique est absorbante pour un rayonnement laser émettant un flux d'énergie prédéterminé à une longueur d'ondes prédéterminée, et présente, à cette longueur d'ondes, une absorptivité spécifique supérieure à celle des autres composants du mélange céramique, **en ce que** ledit mélange céramique contient les particules de matière solide inorganique absorbante à l'état dispersé, en des proportions inférieures à 5 % en poids et supérieures à 1 % en poids du mélange sec, ladite matière solide inorganique comprenant du carbone choisi parmi du graphite, de l'anthracite, du noir de carbone, du charbon actif, des nanotubes de carbone, des feuillets de graphène et leurs mélanges et **en ce que** le procédé comprend en outre :

    - une mise en forme à cru de ce mélange céramique avec obtention d'une ébauche céramique crue, sèche,

    - un usinage à cru de l'ébauche céramique crue, par enlèvement de matière céramique, par son exposition à un rayonnement laser pulsé émettant un flux d'énergie prédéterminé à ladite longueur d'ondes prédéterminée, la durée d'impulsion étant inférieure à 150 ns, et ladite longueur d'onde étant comprise entre 200nm et 3 $\mu$m, et

    - pendant ladite exposition à ce rayonnement laser, une absorption sélective directe de l'énergie de rayonnement laser par les particules de matière solide inorganique dispersée absorbante qui se dégradent brutalement, avec émission gazeuse, dislocation locale de matière céramique de l'ébauche céramique crue, éjection de cette matière céramique disloquée et obtention d'une pièce céramique usinée, à l'état cru.

2. Procédé suivant la revendication 1, **caractérisé en ce que** les particules des composants sont mélangées par voie sèche, en formant une poudre.

3. Procédé suivant la revendication 1, **caractérisé en ce qu'**il comprend une mise en suspension des particules des composants dans un milieu liquide de suspension.

4. Procédé suivant l'une des revendications 1 à 3, **caractérisé en ce que** la mise en forme à cru est réalisée par extrusion, coulage ou pressage du mélange céramique mis en oeuvre.

5. Procédé suivant l'une des revendications précédentes, **caractérisé en ce que** le rayonnement laser pulsé présente une longueur d'ondes de 900 nm à 1100 nm.

6. Procédé suivant l'une des revendications 1 à 5, **caractérisé en ce qu'**il comprend en outre, après usinage à cru, un frittage des particules de matière céramique de la pièce céramique usinée crue.

7. Procédé suivant la revendication 6, **caractérisé en ce qu'**il comprend, avant le frittage, une élimination de la matière solide dispersée absorbante hors de la pièce céramique usinée crue par sollicitation thermique de celle-ci à une température de dégradation de cette matière.

8. Procédé suivant l'une quelconque des revendications 1 à 7, **caractérisé en ce que** l'usinage à cru a lieu à la pression ambiante, sous air.

**Patentansprüche**

1. Verfahren zur Herstellung von keramischen Teilen, umfassend:

    - eine Durchführung einer keramischen Mischung von Partikeln, umfassend, als Bestandteile, einen Hauptgewichtsanteil von sinterfähigen Partikeln aus Keramikmaterial und Partikeln von mindestens einem Zusatzstoff, wobei mindestens einer des mindestens einen Zusatzstoffs ein anorganischer Feststoff ist,

**dadurch gekennzeichnet, dass** der anorganische Feststoff absorbierend für einen Laserstrahl ist, der einen vorbestimmten Energiefluss mit einer vorbestimmten Wellenlänge emittiert und bei dieser Wellenlänge einen spezifischen Absorptionsgrad aufweist, der höher als derjenige der anderen Bestandteile der keramischen Mischung ist, und dadurch, dass die kermamische Mischung die Partikel aus absorbierendem anorganischem Feststoff im dispergierten Zustand in Proportionen von weniger als 5 Gew% und mehr als 1 Gew% der Trockenmischung umfasst, wobei der anorganische Feststoff Kohlenstoff umfasst, ausgewählt aus Graphit, Anthrazit, Ruß, Aktivkohle, Kohlenstoffnanoröhrchen, Graphenplättchen und ihre Mischungen, und dadurch, dass das Verfahren außerdem Folgendes umfasst:

    - eine Rohformung dieser keramischen Mischung mit Erhalt eines trockenen, rohen keramischen Rohlings,

    - eine Rohverarbeitung des keramischen Rohlings durch Entfernen des kermamischen Materials, durch seine Aussetzung an einen gepulsten Laserstrahl, der einen vorbestimmten Energiefluss mit der vorbestimmten Wellenlänge emittiert, wobei die Impulsdauer kleiner als 150 ns und die Wellenlänge im Bereich zwischen 200 nm und 3 $\mu$m liegt, und

    - während der Aussetzung an diesen Laserstrahl eine direkte selektive Absorption der Laserstrahlenergie durch die Partikel des absorbierenden dispergierten anorganischen Feststoffs, die sehr stark abbauen, mit einer gasförmigen Emission, lokalen Verschiebung von Keramikmarterial des rohen kermaischen Rohlings, Ausstoß dieses verschobenen Keramikmaterials und Erhalt eines bearbeiteten keramischen Teils im rohen Zustand.

2. Verfahren nach Anspruch 1, **dadurch gekennzeichnet, dass** die Partikel der Komponenten auf trockenem Weg gemischt sind, indem sie ein Pulver bilden.

3. Verfahren nach Anspruch 1, **dadurch gekenn-**

**zeichnet, dass** es ein Suspendieren der Partikel der Bestandteile in einem flüssigen Suspensionsmedium umfasst.

4. Verfahren nach einem der Ansprüche 1 bis 3, **dadurch gekennzeichnet, dass** die Rohformung durch Extrusion, Gießen oder Pressen der durchgeführten keramischen Mischung erfolgt.

5. Verfahren nach einem der vorhergehenden Ansprüche, **dadurch gekennzeichnet, dass** die gepulste Laserstrahlung eine Wellenlänge von 900 nm bis 1100 nm aufweist.

6. Verfahren nach einem der Ansprüche 1 bis 5, **dadurch gekennzeichnet, dass** es außerdem, nach der Rohbearbeitung, eine Sinterung der Partikel aus Keramikmaterial des rohen bearbeiteten Keramikteils umfasst.

7. Verfahren nach Anspruch 6, **dadurch gekennzeichnet, dass** es, vor der Sinterung, eine Beseitigung des absorbierenden dispergierten Feststoffs weg vom rohen bearbeiteten Keramikteil durch thermische Beanspruchung desselben bei einer Abbautemperatur dieses Materials umfasst.

8. Verfahren nach einem beliebigen der Ansprüche 1 bis 7, **dadurch gekennzeichnet, dass** die Rohbearbeitung bei Umgebungsdruck unter Luft stattfindet.

**Claims**

1. Method of manufacturing ceramic parts comprising:

   - the implementation of a ceramic mixture of particles comprising as components, a major portion by weight of sinterable ceramic particles and particles of at least one additive, wherein at least one of the at least one additives is an inorganic solid material,

   **characterized in that** the inorganic solid material absorbs laser radiation emitting a predetermined energy flux at a predetermined wavelength, and has, at this wavelength, a specific absorptivity that is greater than that of the other components of the ceramic mixture, wherein the ceramic mixture contains the dispersed inorganic solid particles in proportions of less than 5% by weight and greater than 1% by weight of the dry mixture, wherein the inorganic solid material comprises carbon selected from graphite, anthracite, carbon black, activated carbon, carbon nanotubes, graphene sheets and mixtures thereof and wherein the method further comprises:

   - a raw shaping of this ceramic mixture to obtain a dry raw ceramic blank,
   - raw machining of the raw ceramic blank by removal of ceramic material through its exposure to pulsed laser radiation emitting a predetermined energy flux at the predetermined wavelength, wherein the pulse duration lasts less than 150 ns, and the wavelength is between 200nm and $3\mu m$, and
   - while, during the exposure to this laser radiation, there is a direct selective absorption of the energy of the laser radiation by the particles of absorbent dispersed inorganic solid material which degrades abruptly, with gaseous emission, local dislocation of ceramic material from the raw ceramic blank, ejection of this dislocated ceramic material, and the obtaining of a machined ceramic piece in the raw state.

2. Method according to claim 1, **characterized in that** the particles of the components are mixed dry to form a powder.

3. Method according to claim 1, **characterized in that** it comprises suspension of the particles of the components in a liquid suspension medium.

4. Method according to one of claims 1 to 3, **characterized in that** the implementation is effected by extrusion, casting or pressing of the ceramic mixture.

5. Method according to one of the preceding claims, **characterized in that** the pulsed laser radiation has a wavelength of 900 nm to 1100 nm.

6. Method according to one of the claims 1 to 5, **characterized in that** it further comprises sintering of the ceramic particles of the raw machined ceramic part after raw machining.

7. Method according to claim 6, **characterized in that** it comprises, before sintering, elimination of absorbent dispersed solid material from the raw machined ceramic part by thermal action at a degradation temperature of this material.

8. Method according to any one of the claims 1 to 7, **characterized in that** the raw machining takes place at ambient pressure, under air.

FIG. 1

FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006079459 A
- DE 19501279
- WO 2010055277 A
- US 20100032417 A

- US 20070006561 A
- JP H07106192 B
- JP H2000289016 B

**Littérature non-brevet citée dans la description**

- **PHAM D.T.** Laser milling. *Proc Instn Mech Engrs, Vol.216 Part B : J. Engineering Manufacture,* 2002, vol. 216, 657-667
- **A. KRUUSING.** Underwater and water-assisted laser processing : Part 1-general features, steam cleaning and schock processing. *Optics and Lasers in Engineering,* 2004, vol. 41, 307-327
- **J. GURAUSKIS.** Laser drilling of Ni-YSZ Cements. *Journal of the European Ceramic Society,* 2008, vol. 28, 2673-2680

- **KAMRAN IMEN et al.** Pulse CO2 Laser Drilling of Green Alumina Ceramic. *IEEE Transactions on Advanced Packaging,* Novembre 1999, vol. 22 (4
- LIA handbook of laser materials processing. Laser Institute of America, Magnolia Publishing Inc, 2001
- **OLIVEIRA C. et al.** Etude de l'absorption du rayonnement IR en vue du traitement laser d'alliages ferreux. *J. Phys. III France,* 1992, vol. 2, 2203-2223